# EUROPEAN PATENT SPECIFICATION

(11) **EP 0 791 736 B1**
(45) Date of publication and mention of the grant of the patent: **06.11.2002**
(21) Application number: 97101159.8
(22) Date of filing: 24.01.1997
(51) Int. Cl.: F02D 21/08

(54) **Control apparatus for exhaust gas recirculation system for diesel engine**
Steuergerät für Abgasrückführungssystem für Dieselbrennkraftmaschine
Appareil de commande pour système de recirculation de gaz d'échappement pour moteur diesel

(30) Priority: 25.01.1996 JP 1104996
(43) Date of publication of application: 27.08.1997
(73) Proprietor: TOYOTA JIDOSHA KABUSHIKI KAISHA, Aichi-ken (JP)
(72) Inventor: Iwai, Akira, Toyota-shi, Aichi-ken 473 (JP); Hidaka, Shigeki, Kariya-shi, Aichi-ken 448 (JP)
(74) Representative: Pellmann, Hans-Bernd, Dipl.-Ing.

(56) References cited:
- FR-A- 2 415 725
- FR-A- 2 441 727
- US-A- 4 474 081
- US-A- 5 377 651

## Description

### TECHNICAL FIELD

The present invention relates generally to an exhaust gas recirculation (EGR) control apparatus for a diesel engine that recirculates part of the exhaust gas in an exhaust passage to an intake passage, returns that gas into the engine, and controls the amount of the recirculated gas. More particularly, this invention relates to an EGR control apparatus for use in a diesel engine, which apparatus calculates either the difference between an estimated amount of intake air and an actual amount of intake air, or the ratio of the estimated intake air amount to the actual intake air amount. The estimated amount is calculated based on various parameters representing the running condition of the engine and the actual amount is measured by intake air amount detection means located in the intake passage. The apparatus uses the calculated difference or ratio as the EGR amount and controls it.

### RELATED BACKGROUND ART

Existing EGR apparatuses for use in diesel engines recirculate part of the exhaust gas, which is discharged to an exhaust passage from individual combustion chambers, to an intake passage and return that gas into the combustion chambers, thereby reducing the nitrogen oxide (NOx) content in the exhaust gas. In apparatuses of this type, an increased EGR amount, as compared to the prior art, is expected to further reduce the amount of NOx.

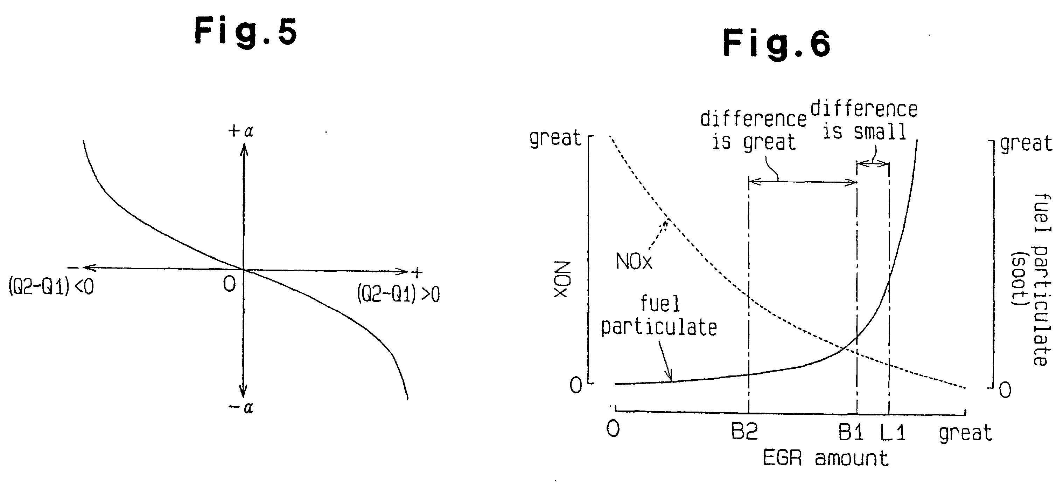

The graph in Fig. 6 shows the relationship between the amount of EGR and the amount of NOx and fuel particulate. The permissible amount of NOx in exhaust gas was not as restricted in the past as it is now. Therefore, the amount (maximum amount) of EGR at a reference level B2 was sufficient to meet the former requirements. However, in accordance with the present requirements for lower NOx, the maximum amount of EGR needs to be set at a reference level B1, which is greater than the reference level B2. An increase in the EGR amount beyond a referential value B1 increases the amount of fuel particulate in the exhaust gas while reducing the amount of NOx contained therein. The limit of acceptable fuel particulate amount is set at L1. The difference between the limitation value L1 and the referential value B1 is by far smaller than the difference between the value L1 and the referential value B2. The EGR amount needs to be accurately controlled to approximate the referential value B1 so that the EGR amount does not exceed the limitation value L1. In other words, the EGR amount needs to be controlled to approach the referential value B1 while minimizing fuel particulate discharge. Accordingly, the control accuracy of EGR apparatuses needs to be improved, for example, by adequately controlling the EGR amount based on the running condition of the engine.

Japanese Unexamined Utility Model Publication No. 4-89843 discloses an EGR apparatus that controls the EGR amount based on the running condition of a diesel engine. The EGR apparatus has an EGR passage, a diaphragmatic EGR valve, a control valve and a control unit. The EGR passage conducts exhaust gas from the exhaust passage to the air-intake passage . The EGR valve controls the EGR amount flowing through the EGR passage. The control valve selectively opens and closes the EGR valve. The control unit controls the control valve.

The control unit calculates the amount of air drawn into the individual cylinders in the engine based on the rotational speed of the engine and the engine load detected by various sensors. The resulting air amount value is hereinafter referred to as the "estimated intake air amount". The control unit obtains the amount of outside air (new air) drawn into the intake passage based on values measured by an air-flowmeter. The obtained value is hereinafter referred to as the "actual intake air amount". The control unit calculates the actual EGR rate based on the estimated intake air amount and the actual intake air amount and determines a target EGR rate referring to a function data (map). The control unit compares the target EGR rate with the actual EGR rate and controls the control valve such that the actual EGR rate matches the target EGR rate.

The actual intake air amount drawn into the cylinders may deviate from the estimated intake air amount because of deterioration in the engine that prevents the air flow therein, for example, a clogged air cleaner. To minimize the deviation, the control unit obtains the actual intake air amount by the air-flowmeter in the non-EGR area, that is, while the EGR is not executed. The control unit further calculates the difference between the measured intake air amount and the estimated air amount and uses the resultant as a correction coefficient. The control unit corrects the estimated intake air amount based on the correction coefficient, and thereby compensates for the deviation of the EGR rate. The compensation is performed on the assumption that the air-flowmeter has no tolerances and does not deteriorate with age. The correction of the estimated intake air amount compensates for excess or short EGR caused by the tolerance in the intake characteristics of individual engines, thereby minimizing the amount of NOx and fuel particulate in exhaust gas and preventing the fuel consumption from deteriorating.

However, in the prior art EGR apparatus, tolerance and deterioration in the air-flowmeter may produce error in the actual intake air amount. Errors in the actual intake air amount cause the estimated intake air amount to be wrongly compensated. The EGR amount may thus be inaccurate.

One of the reasons for the above setback is that the EGR amount is indirectly calculated based on the difference between the estimated intake air amount and the actual intake air amount. Therefore, errors of the air-flowmeter are entirely reflected in errors in the EGR amount. Another reason is that errors of the air flow meter become greater as the actual intake air amount becomes greater. Further, the control characteristics of a diesel engine require that the EGR amount be reduced so that the actual intake air amount increases as the engine load becomes greater. Therefore, in a diesel engine, errors of the air flow meter greatly affect the EGR amount.

As a result, the control accuracy of the EGR amount tends to deteriorate when the engine load is high, that is, when the deterioration generates the most unburned fuel particulate. Therefore, even when the EGR is controlled, a great amount of unburned fuel particulate is discharged. Further, when detecting an abnormality in the EGR amount, sufficient detection accuracy may not be obtained. Thus, there is a demand for an air flow meter that measures the actual intake air amount with a high accuracy.

Further, the US-A-5 377 651 discloses a control apparatus for exhaust gas discharged from a diesel engine to an exhaust passage having a recirculation system for recirculating part of the exhaust gas to the diesel engine via an intake passage which comprises a computer for controlling the amount of the recirculating exhaust gas by controlling the recirculation system and an intake sensor for detecting the an actual amount of intake air flowing in the intake passage. From the detected air inflow amount an actual air inlet rate per cylinder is calculated and compared with a target air inlet rate per cylinder which is calculated on the basis of a desired fuel quantity. The difference between the actual air inlet rate and the target air inlet rate is used as an inlet rate error term for correcting the amount of the desired recirculating exhaust gas quantity.

### DISCLOSURE OF THE INVENTION

It is a primary object of the invention to provide an EGR control apparatus in a diesel engine that accurately controls the exhaust gas recirculation amount even when there are errors in the detected actual intake air amount.

To achieve the foregoing and other objects and in accordance with the purpose of the invention, an EGR control apparatus according to claim 1 is provided with further developments set forth in the corresponding subclaims.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a schematic diagram illustrating an engine system according to a first embodiment;
Fig. 2 is a flowchart illustrating an "EGR control routine";
Fig. 3 is a flowchart illustrating an "abnormality detecting routine";
Fig. 4 is a graph showing the relationship between the engine load and amounts QE, Q1, Q2;
Fig. 5 is a graph showing function data used for calculating integrated values; and
Fig. 6 is a graph showing the relationship between EGR amount and the amount of discharged NOx and fuel particulate in a prior art apparatus.

### DESCRIPTION OF SPECIAL EMBODIMENT

An embodiment of a exhaust gas recirculation apparatus in a diesel engine of a vehicle will now be described with reference to the drawings.

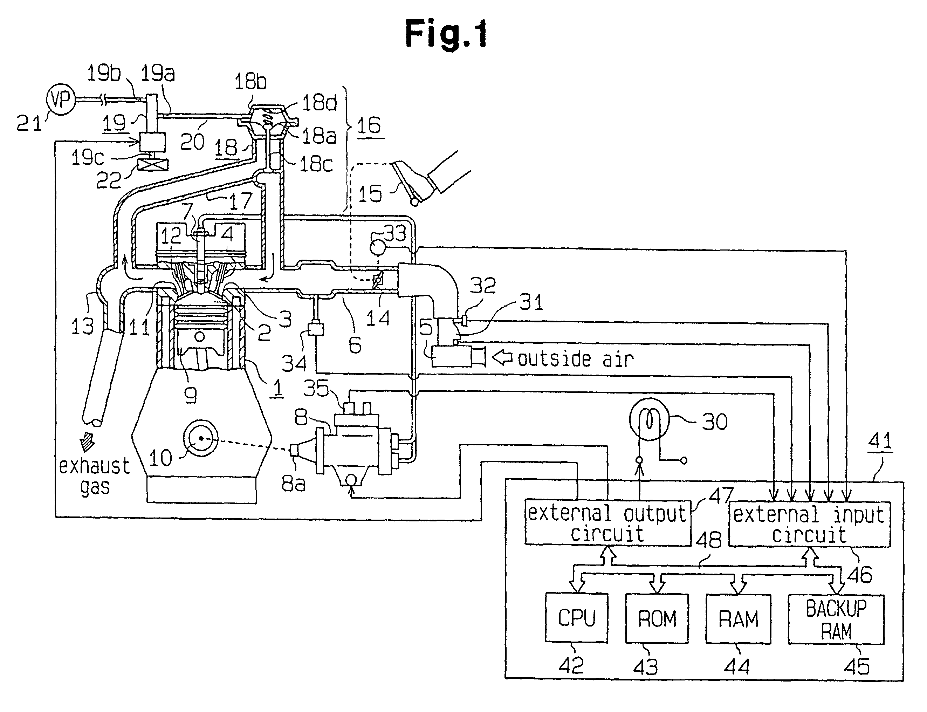

Fig. 1 is a schematic diagram illustrating a diesel engine system according to this embodiment. A diesel engine 1 has a plurality of cylinders, each including a combustion chamber 2. In the suction stroke of the engine 1, suction ports 3 provided in the respective cylinders are opened by intake valves 4. This allows outside air, which is drawn into an air-intake passage 6 via an air cleaner 5, to flow into the individual combustion chambers 2. Fuel injection nozzles 7 provided for the individual cylinders inject fuel that is supplied under pressure by a fuel injection pump 8 into the associated combustion chambers 2. In the compression stroke of the engine 1, the mixture of fuel and air in each combustion chamber 2 is compressed by the upward movement of an associated piston 9 to be combusted. This combustion pushes the piston 9 downward to turn a crankshaft 10, thus giving driving power to the engine 1. In the exhaust stroke of the engine 1, exhaust ports 11 respectively provided in the cylinders are opened by exhaust valves 12. As a result, the exhaust gas produced in each combustion chamber 2 is discharged to an exhaust passage 13, from which the gas is further discharged outside.

A throttle valve 14 provided in the air-intake passage 6 selectively opens or closes the air-intake passage 6 in response to the manipulation of an acceleration pedal 15. The actuation of the valve 14 adjusts the amount of outside air Q2 (actual intake air amount) drawn into the air-intake passage 6.

An exhaust gas recirculation (EGR) apparatus 16 recirculates part of the exhaust gas, which is discharged to the exhaust passage 13 from individual combustion chambers 2, to the air-intake passage 6 and returns that gas into the individual combustion chambers 2. The EGR apparatus 16 has an EGR passage 17 for conducting part of the exhaust gas to flow to the air-intake passage 6 from the exhaust passage 13 and an EGR valve 18 for controlling the amount of EGR in the passage 17. The EGR valve 18 is a diaphragm valve that selectively opens or closes in response to the selective application of negative pressure or atmospheric pressure as a working pressure. The EGR valve 18 has a housing 18b accommodating a diaphragm 18a, a valve body 18c secured to the diaphragm 18a, and a spring 18d for urging the valve body 18c in the direction to close the EGR passage 17. This EGR apparatus 16 further includes an electric vacuum regulating valve (EVRV) 19. The EVRV 19 is electrically controlled to switch between the negative pressure or atmospheric pressure, which is selectively applied in the housing 18b.

The EVRV 19 is a three way valve having three ports 19a, 19b and 19c. The output port 19a is communicated with the housing 18b of the EGR valve 18 via a communication passage 20. The negative pressure port 19b is communicated with a vacuum pump 21 as a negative pressure source. The atmospheric air port 19c is communicated with the atmospheric air via a filter 22. The filter 22 prevents dust and mud from entering the EVRV 19 through the atmospheric air port 19c.

When the EVRV 19 is electrically enabled, the output port 19a is communicated with the negative pressure port 19b. This introduces negative pressure in the housing 18b of the EGR valve 18. In the EGR valve 18, the diaphragm 18a deforms upward against the force of the spring 18d to move the valve body 18c upward, thereby opening the EGR passage 17, that is, opening the EGR valve 18. This conducts the exhaust gas through the EGR passage 17 to be recirculated to the air-intake passage 6. The exhaust gas is returned to the individual combustion chambers 2 through the air-intake passage 6. In other words, EGR is executed. As the EVRV 19 is electrically disabled, on the other hand, the output port 19a and the atmospheric air port 19c are communicated. This introduces atmospheric pressure to the housing 18b. In the EGR valve 18, the diaphragm 18a deforms downward by the urging force of the spring 18d to move the valve body 18c downward. This closes the EGR passage 17. That is, the EGR valve 18 is closed. This stops flow of exhaust gas in the EGR passage 17. The execution of EGR is thus suspended.

The fuel injection pump 8, which is of a known distribution type, supplies fuel to be combusted in each combustion chamber 2 to each injection nozzle 7. The injection pump 8 compresses the fuel retained in a fuel tank (not shown) to a highly pressurized state and supplies a predetermined amount of fuel under high pressure to the individual injection nozzles 7 at a predetermined timing. Each injection nozzle 7 operates based on the pressure of the pressurized fuel to inject the fuel to the associated combustion chamber 2. A governor (not shown) incorporated in the injection pump 8 adjusts the amount of fuel (discharge timing) to be pumped out from the pump 8 each time. A timer (not shown) likewise incorporated in the injection pump 8 controls the start timing for the fuel discharge from the pump 8. The governor and the timer are electrically controlled. A drive shaft 8a of the injection pump 8 is coupled to the crankshaft 10 of the engine 1. The injection pump 8 is driven in response to the operation of the engine 1.

An air-flowmeter 31 as an intake amount detection means is located near the air cleaner 5. The air-flowmeter 31 measures the amount of intake air or the actual intake air amount Q2 to be supplied into the air-intake passage 6 and issues a signal corresponding to the amount Q2. More specifically, the air-flowmeter 31 outputs a voltage value VA as the value corresponding to the measured actual intake air amount Q2. An air temperature sensor 32 located next to the air-flowmeter 31 detects the temperature of air (intake air temperature) THA to be supplied to the air-intake passage 6 and issues a signal corresponding to the detected temperature. A throttle sensor 33 provided in the vicinity of the throttle valve 14 detects the opening amount of the valve 14 as an acceleration opening amount ACCP (corresponding to the amount of the manipulation of the acceleration pedal 15) and issues a signal corresponding to that opening amount. The sensor 33 incorporates a known idle switch (not shown). When the throttle valve 14 is fully closed, i.e., when the acceleration pedal 15 is not manipulated, the idle switch is set "ON" and outputs an idle signal IDL indicative of the fully-closed state of the pedal 15. An intake manifold pressure sensor 34, which is provided in the air-intake passage 6, detects intake manifold pressure PM in the air-intake passage 6 and issues a signal corresponding to the manifold pressure. A rotational speed sensor 35 provided at the injection pump 8 detects the rotational speed of the crankshaft 10 or the engine speed NE based on the rotational speed of the drive shaft 8a, and issues a signal corresponding to the engine speed.

A diagnostic lamp 30 provided at the instrument panel (not shown) in the passenger compartment of a vehicle informs the driver that there is abnormality in the air-flowmeter 31.

An electronic control unit (ECU) 41 receives signals outputted from the aforementioned various kinds of sensors 31 to 35. Based on those signals, the ECU 41 controls the injection pump 8, the EVRV 19 and the diagnostic lamp 30.

The ECU 41 includes a central processing unit (CPU) 42, a read only memory (ROM) 43, a random access memory (RAM) 44, and a backup RAM 45. The ECU 41 is a logical operation circuit incorporating the components 42 to 45, an external input interface circuit 46 and an external output interface circuit 47. The components 42 to 45 and the interface circuits 46, 47 are connected by a bus 48. The CPU 42 has a function to control calculations and a function as a counter. Predetermined control programs are previously stored in the ROM 43. The RAM 44 temporarily stores the results of computations performed by the CPU 42. The backup RAM 45 retains prestored data. The external input interface circuit 46 includes a buffer, a wave shaper and an A/D converter. The external output interface circuit 47 includes a drive circuit. The sensors 31 to 35 are connected to the external input interface circuit 46. The injection pump 8, the EVRV 19 and the diagnostic lamp 30 are connected to the external output interface circuit 47.

The CPU 42 reads the signals from the sensors 31 to 35 as input values, which are inputted via the external input interface circuit 46. Based on the inputted values, the CPU 42 controls the injection pump 8, the EVRV 19 and the diagnostic lamp 30 to execute the fuel injection control, EGR control and abnormality detecting control associated with the air-flowmeter 31.

The fuel injection control in this embodiment refers to control of the amount and the pump-out timing of fuel pumped out from the injection pump 8 in accordance with the running conditions of the engine 1. The EGR control refers to an actuation of the EGR valve 18 by controlling the EVR valve 19 in accordance with the running conditions of the engine 1 to control the amount of EGR.

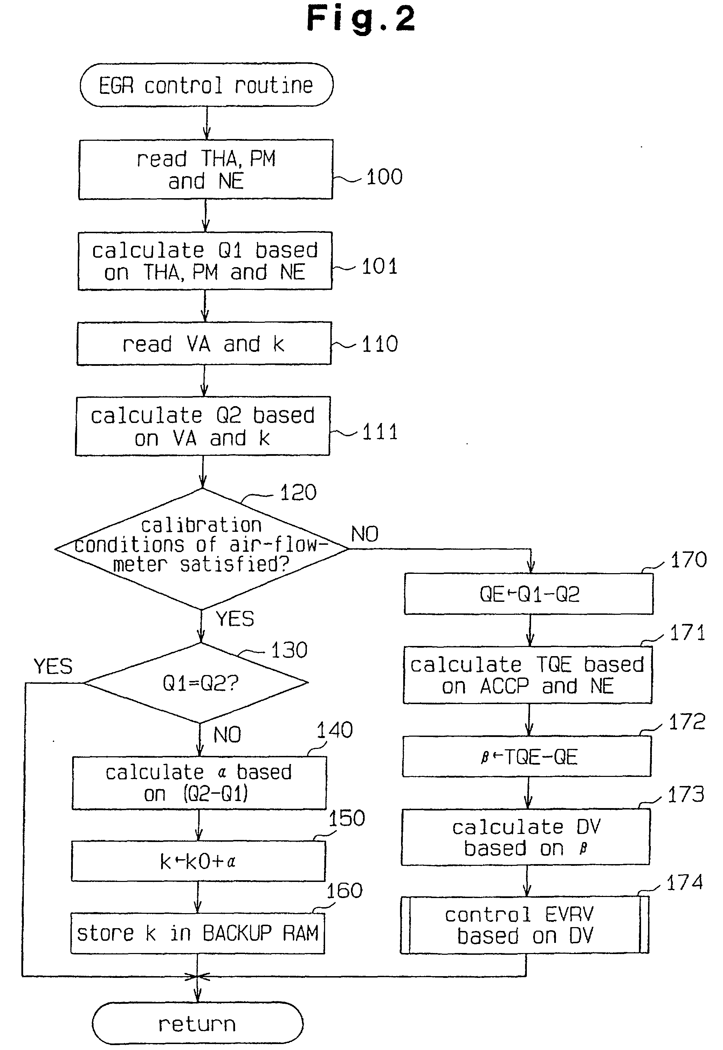

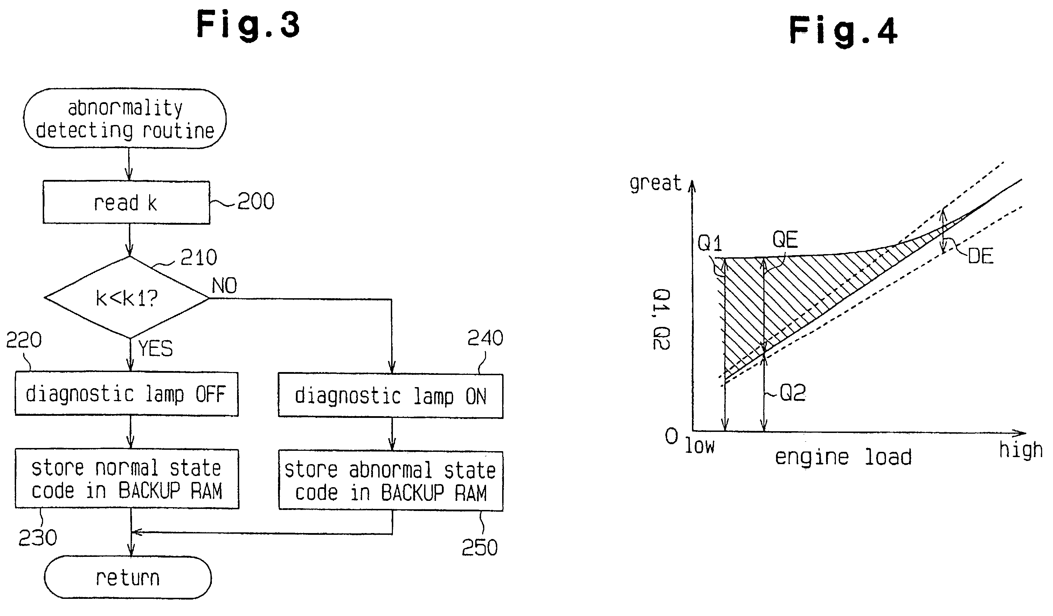

The ECU 41 performs various controls. Among those controls, the procedures for the EGR control and the abnormality detection control associated with the air-flowmeter 31 will now be described. The control programs for various routines are illustrated in the flowcharts in Figs. 2 and 3. The programs are previously stored in the ROM 43.

Fig. 2 presents the flowchart illustrating an "EGR control routine" for executing the EGR control. The ECU 41 periodically performs the routine at predetermined intervals.

In step 100, the ECU 41 reads the intake air temperature THA, the intake manifold pressure PM and the engine speed NE based on the detection signals from the sensors 32, 34 and 35, respectively.

In step 101, the ECU 41 calculates the amount of air drawn into the combustion chambers 2, or the estimated intake air amount Q1, based on the inputted parameters THA, PM and NE. More specifically, the ECU 41 calculates the estimated intake air amount Q1 based on the predetermined function data utilizing the intake air temperature THA, the manifold pressure PM and the engine speed NE as parameters. The estimated intake air amount Q1 is a theoretical value determined in accordance with the running condition of the engine 1. The value of Q1 basically depends on the speed NE and the load of the engine 1. In this embodiment, the ECU consults the intake air temperature THA, as well as the parameters NE and PM, to calculate the estimated intake air amount Q1, thereby improving the calculation accuracy of Q1.

In step 110, the ECU 41 reads the voltage value VA outputted from the air-flowmeter 31. The ECU 41 also reads the correction coefficient k that is stored in the backup RAM 45. The correction coefficient k will be discussed later.

In step 111, the ECU 41 obtains the actual intake air amount Q2 based on the inputted parameters VA and k. More specifically, the ECU 41 multiplies the measured voltage value VA by the correction coefficient k for correcting the voltage value VA, thereby obtaining the actual intake air amount Q2. Fig. 4 presents a graph illustrating the relationship between the engine load and the estimated and actual intake air amounts Q1, Q2. The graph also shows the relationship between the engine load and EGR amount QE (the area marked by hatching). As shown in the graph, the ECU 41 executes the EGR control such that the EGR amount QE decreases as the engine load increases. In this operation, the estimated intake air amount Q1 is calculated by adding the EGR amount QE to the actual intake air amount Q2. As illustrated by two broken lines in the graph, the actual intake air amount Q2 includes a deviation DE caused by deterioration and tolerance. The deviation DE becomes greater as the engine load increases.

In step 120, the ECU 41 judges if conditions for calibration of the air-flowmeter 31 are satisfied. The air-flowmeter 31 may have errors in measured values due to its deterioration with age and tolerances. The calibration of the air-flowmeter 31 in this embodiment refers to correction of measuring errors of the meter 31 by using a predetermined referential value.

Generally, an error in a value measured by the air-flowmeter 31 is apt to be greater when the engine speed NE is higher and the engine load is greater. In the step 120, the calibration conditions consist of a high engine speed, a great engine load, inoperation of EGR, and a steady running condition of the engine 1. When all these conditions are met, the calibration conditions are satisfied. Alternatively, the calibration conditions may be considered to be satisfied when the execution of EGR is forced to stop when the engine 1 is steadily idling. When the calibration conditions are satisfied in step 120, the ECU 41 proceeds to step 130.

In step 130, the ECU 41 judges if the estimated intake air amount Q1 is equal to the actual intake air amount Q2. In the step 130, the estimated intake air amount Q1 when EGR is not executed is used. When EGR is not executed, the exhaust gas is not recirculated to the air-intake passage 6. Therefore the estimated intake air amount Q1 is theoretically equal to the amount of the outside air drawn into the engine 1, that is, Q1 is theoretically equal to the actual intake air amount Q2. Here, the value of the estimated intake air amount Q1 is used as a referential value. Therefore, the difference between the estimated and actual intake air amounts Q1, Q2 is equal to an error in voltage value VA measured by the air-flowmeter 31.

If the intake air amounts Q1 and Q2 are equal to each other, the ECU 41 judges that there is no error in the voltage value VA and temporarily terminates the subsequent processing. If the intake air amounts Q1 and Q2 are different from each other, on the other hand, the ECU 41 judges that there is an error in the voltage value VA and proceeds to step 140.

In step 140, the ECU 41 calculates an integral value α, which is used for correcting the voltage value VA of the air-flowmeter 31 based on the difference between the actual intake air amount Q2 and the estimated intake air amount Q1. The ECU 41 uses the function data shown in Fig. 5 for calculating the integral value α.

In step 150, the ECU 41 obtains a new correction coefficient k by adding the integrated value α calculated in the previous step to the correction coefficient k0, which is obtained in the previous routine. The initial value of the correction coefficient k is 1.0.

In step 160, the ECU 41 stores the correction coefficient k, which is calculated in step 140, in the backup RAM 45 and then temporarily terminates the subsequent processing. The ECU 41 reads the correction coefficient k in step 110 of the next routine.

When the calibration conditions are not satisfied in step 120 the ECU 41 goes to step 170 in order to execute EGR.

In step 170, the ECU 41 obtains EGR amount QE by subtracting the actual intake air amount Q2 from the estimated intake air amount Q1. In step 170, the estimated intake air amount Q1 calculated during the execution of EGR is used. The estimated intake amount Q1 thus includes part of the exhaust gas recirculated to the air-intake passage 6 and outside air drawn into the air-intake passage 6. Therefore, the EGR amount QE is equal to the difference between the estimated intake air amount Q1 and the actual intake air amount Q2.

In step 171, the ECU 41 calculates a target EGR amount TQE in accordance with the current running condition of the engine 1 based on the parameters ACCP and NE detected by the sensors 33, 35.

In step 172, the ECU 41 calculates the difference between the calculated target EGR amount TQE and the EGR amount QE and obtains the resultant value as a deviation value of the EGR control β. The ECU 41 can obtain the target EGR amount TQE by adjusting the EGR amount QE such that the deviation value β approaches zero.

In step 173, the ECU 41 calculates a command value VD to be sent to the EVRV 19 based on the deviation β. The command value VD allows the deviation β to approach zero

In step 174, the ECU 41 controls the EVRV 19 based on the command value VD for controlling EGR valve 18 and then temporarily terminates the subsequent processing.

Fig. 3 presents a flowchart illustrating an "abnormality detecting routine" for detecting abnormality in the air-flowmeter 31 based on the correction coefficient k. The ECU 41 periodically performs this routine at predetermined intervals.

In step 200, the ECU 41 reads the value of the correction coefficient stored in the backup RAM 54.

In step 210, the ECU 41 compares the value of the correction coefficient k with a predetermined referential value k1. The referential value k1 is equal to the minimal value in a range of the correction coefficient k values indicating that the coefficient k is abnormally great, or that there is an abnormality in the air-flowmeter 31. The value of the coefficient k when the air-flowmeter is in the normal state ranges for example from 0.9 to 1.1. The value of the coefficient k when the air-flowmeter is in the abnormal state ranges for example from 1.3 to 1.4. In this case, the value of the referential value may be set at 1.3. When the coefficient k is smaller than k1, the ECU 41 judges that there is no abnormality in the air-flowmeter 31 itself and proceeds to step 220.

In step 220, the ECU 41 turns the diagnostic lamp 30 off. In step 230, the ECU 41 stores a normal state code, which indicates that the air-flowmeter 31 itself is in the normal state, in the backup RAM 45. The ECU 41 then temporarily terminates the subsequent processing.

In step 210, when the correction coefficient k is equal to or greater than the referential value k1, on the other hand, the ECU judges that there is an abnormality in the air-flowmeter 31 itself and proceeds to step 240.

In step 240, the ECU 41 illuminates the diagnostic light 30 for indicating an abnormality of the air-flowmeter 31. In step 250, the ECU 41 stores an abnormal state code, which indicates that there is an abnormality in the air-flowmeter 31 itself, in the backup RAM 45. The ECU 41 then temporarily terminates the subsequent processing.

As described above, the ECU 41 of this embodiment calculates the air amount drawn into the combustion chambers 2 of the engine 1 as the estimated intake air amount Q1 based on various parameters concerning the engine's running condition. The ECU 41 reads the amount of the outside air measured by the air-flowmeter 31 as the actual intake air amount Q2. The ECU 41 obtains the difference between the estimated intake air amount Q1 and the actual intake air amount Q2 as EGR amount QE. The ECU 41 controls the EVRV 19 according to EGR amount QE, thereby controlling the EGR valve 18. The ECU 41 also corrects the value of the actual intake air amount Q2 in accordance with the difference between the estimated and actual intake air amounts Q1, Q2 calculated while the EGR is not executed.

When EGR is not executed, the exhaust gas is not recirculated to the air-intake passage 6. Therefore the estimated intake air amount Q1 is theoretically equal to the amount of the outside air drawn into the engine 1. In other words the estimated intake air amount Q1 is theoretically equal to the actual intake air amount Q2. When the value of the estimated intake air amount Q1 is used as a referential value, the difference between the estimated and actual intake air amounts Q1, Q2 is equal to an error in the measured actual intake air amount Q2.

An error in the actual intake air amount Q2 is corrected in accordance with the difference between the estimated and actual intake air amounts Q1, Q2. This allows the EGR amount QE that is controlled during the EGR operation to be correctly calculated. Therefore, even if a value measured by the air-flowmeter 31, or the voltage value VA, includes an error, the EGR amount QE is accurately controlled. This prevents an excessive or low EGR amount caused by deterioration or tolerance of the air-flowmeter 31. This even increases the EGR amount to its maximum while restricting the discharge of fuel particulate. Accordingly, discharge of NOx and soot from the engine 1 is restricted and deterioration of the engine's mileage is prevented.

In this embodiment, the ECU 41 calculates the estimated intake air amount Q1, which is a theoretical value, based on various parameters including the intake manifold pressure PM and the engine's rotation speed NE. During execution of the EGR, the amount of EGR QE is accurately calculated based on the estimated intake air amount Q1. Therefore, even when there is an error in a value measured by the air-flowmeter 31, the EGR amount QE is accurately controlled. Especially in this embodiment, the intake air temperature THA is used as one of the parameters for calculating the estimated intake air amount Q1 together with the parameters PM, NE. This improves the accuracy in the calculation of the estimated intake air amount Q1, thereby improving the control accuracy of EGR amount QE.

In this embodiment, the diagnostic lamp 30 is lit when abnormality of the air-flowmeter 31 itself is detected. This quickly notifies the driver of the existence of the abnormality. Therefore, the driver can replace the air-flowmeter 31 for restoring the controllability of the EGR. In this manner, the driver can deal with emission deterioration of the engine 1 in its early stages.

In this embodiment, when an abnormality is detected in the air-flowmeter 31 itself, an abnormal state code indicating the abnormality is stored in the backup RAM 45. Therefore, when the engine 1 is inspected, the inspector can obtain the history record of abnormality in the air-flowmeter 31 by reading the data stored in the backup RAM 45. This allows the air-flowmeter 31 to be replaced at an adequate time. In this manner, deterioration of the engine's emissions is dealt with in its early stage.

Although only one embodiment of the present invention has been described herein, it should be apparent to those skilled in the art that the present invention may be embodied in many other specific forms without departing from the spirit or scope of the invention. Particularly, it should be understood that the present invention may be embodied in the following forms.

In the above described embodiment, the intake air temperature THA, the intake manifold pressure PM and the engine speed NE are used as parameters for calculating the estimated intake air amount Q1. However, the intake air temperature THA may be omitted.

In the described embodiment, the difference between the estimated intake air amount Q1 and the actual intake air amount Q2 is used as the EGR amount QE. The EGR amount QE may however be calculated based on the ratio of the estimated intake air amount Q1 and the actual intake air amount Q2.

In the described embodiment, the vacuum pump 21 is used as the negative pressure source. However, part of the intake air passage where a negative pressure is generated when the engine is running may be used as the negative pressure source. In this case the negative pressure port of the EVRV is communicated with such part.

In the first embodiment, the EGR valve 18 controlled by the EVRV 19 is used. However, an EGR valve driven by a step motor may be used.

Therefore, the present examples and embodiments are to be considered as illustrative and not restrictive and the invention is not to be limited to the details given herein, but may be modified within the scope of the appended claims.

An exhaust gas recirculation (EGR) control apparatus recirculates part of the exhaust gas discharged to a exhaust passage from a diesel engine to a intake passage and returns it to the engine. The control apparatus further includes an EGR valve for controlling gas flow in the EGR passage and pressure control valve for controlling the EGR passage. An electronic control unit (ECU) calculates the amount of air drawn into the engine as an estimated intake air amount based on the running condition of the engine. The ECU reads the amount of outside air drawn into the engine measured by an air-flowmeter as an actual intake air amount. The ECU obtains an EGR amount by calculating the difference or ratio of the estimated and actual intake air amounts as the EGR amount. The ECU controls the pressure control valve based on the calculated difference, thereby controlling the EGR valve 18. The EGR amount is controlled, accordingly. The ECU corrects the actual intake air amount measured by the air-flowmeter according to the difference between the estimated and actual intake air amount calculated while EGR is not being executed.

## Claims

1. A control apparatus for exhaust gas discharged from a diesel engine (1) to an exhaust passage (13), said apparatus having
a recirculation system (16) for recirculating part of the exhaust gas to the diesel engine (1) via an intake passage (6),
an intake sensor (31) for detecting an actual amount (Q2) of intake air flowing in the intake passage (6), and
a computer (41) which controls the recirculation system (16) for controlling an amount (QE) of the recirculating exhaust gas based on a calculated difference (Q2 - Q1) between said actual amount (Q2) of intake air and an estimated amount (Q1) of intake air computed on the basis of the driving condition of the engine (1) or based on a calculated ratio of said actual amount (Q2) and said estimated amount (Q1) of intake air so as to adjust the amount (QE) of the recirculating exhaust gas,
**characterized in that**
said computer (41) obtains the actual amount (Q2) of intake air based on an output (VA) of said intake sensor (31) and on a correction coefficient (k) which is updated based on said calculated difference (Q2 - Q1) or said calculated ratio when the recirculation system (16) stops the recirculation of the exhaust gas.

2. The apparatus as set forth in Claim 1, **characterized by** a pressure sensor (34) for detecting intake pressure in the intake passage (6) and speed sensor (35) for detecting engine speed, wherein said computer (41) computes the estimated amount based on parameters including the intake pressure detected by the pressure sensor (34) and the engine speed detected by the speed sensor (35).

3. The apparatus as set forth in Claim 2, **characterized by** a temperature sensor (32) for detecting temperature of the intake air flowing in the intake passage (6), wherein said computer (41) computes the estimated amount based on the parameters including the intake pressure detected by the pressure sensor (34), the engine speed detected by the speed sensor (35) and the temperature of the intake air.

4. The apparatus as set forth in any one of the preceding claims, **characterized by** that said recirculating system (16) includes an EGR passage (17) for guiding part of the exhaust gas from the exhaust passage (13) to the intake passage (6) and an EGR valve (18) for adjusting the exhaust gas flow in the EGR passage (17), wherein said EGR valve (18) selectively opens and closes the EGR passage (17).

5. The apparatus as set forth in any one of the preceding claims, **characterized by** an intake-air sensor (31) for detecting amount of the intake-air and a warning device (30) for warning the operator of malfunction of the intake-air sensor (31), wherein said computer (41) determines the malfunction of the intake-air sensor (31) based on the computed difference or the computed ratio and actuates the warning device (30).

6. The apparatus as set forth in Claim 5, **characterized by** a recording device (45) for recording the malfunction of the intake-air sensor (31), wherein said computer (41) determines the malfunction of the intake-air sensor (31) based on the computed difference or the computed ratio and actuates the recording device (45).

7. The apparatus as set forth in any one of the preceding claims, **characterized by** said computer includes an electric control unit (41) that has an input interface circuit (46), memories (43, 44, 45), a computing circuit (42) and an output interface circuit (47).

## Patentansprüche

1. Steuergerät für von einer Dieselkraftmaschine (1) zu einem Abgasdurchlass (13) abgegebenes Abgas, wobei das Gerät folgendes hat:
ein Rückführungssystem (16) zum Rückführen eines Teils des Abgases zu der Dieselkraftmaschine (1) über einen Einlassdurchlass (6),
einen Einlasssensor (31) zum Ermitteln einer gegenwärtigen Menge (Q2) von in dem Einlassdurchlass (6) strömender Einlassluft, und
einen Computer (41), der das Rückführungssystem (16) zum Steuern einer Menge (QE) des umlaufenden Abgases aufgrund eines berechneten Unterschiedes (Q2 - Q1) zwischen der gegenwärtigen Menge (Q2) von Einlassluft und einer auf Grundlage der Antriebsbedingung der Kraftmaschine (1) berechneten geschätzten Menge (Q1) von Einlassluft oder auf Grundlage eines berechneten Verhältnisses der gegenwärtigen Menge (Q2) und der geschätzten Menge (Q1) von Einlassluft so steuert, dass die Menge (QE) des umlaufenden Abgases angepasst wird,
**dadurch gekennzeichnet, dass**
der Computer (41) die gegenwärtige Menge (Q2) von Einlassluft auf Grundlage einer Ausgabe (VA) des Einlasssensors (31) und auf Grundlage eines Korrekturfaktors (k) erhält, der auf Grundlage des berechneten Unterschieds (Q2 - Q1 oder auf Grundlage des berechneten Verhältnisses aktualisiert wird, wenn das Rückführungssystem (16) die Rückführung des Abgases stoppt.

2. Gerät gemäß Anspruch 1, **gekennzeichnet durch** einen Drucksensor (34) zum Ermitteln von Einlassdruck in dem Einlassdurchlass (6) und einen Drehzahlsensor (35) zum Ermitteln einer Kraftmaschinendrehzahl, wobei der Computer (41) die geschätzte Menge auf Grundlage von Parametern einschließlich des **durch** den Drucksensor (34) ermittelten Einlassdrucks und der **durch** den Drehzahlsensor (35) ermittelten Kraftmaschinendrehzahl berechnet.

3. Gerät gemäß Anspruch 2, **gekennzeichnet durch** einen Temperatursensor (32) zum Ermitteln einer Temperatur der in dem Einlassdurchlass (6) strömenden Einlassluft, wobei der Computer (41) die geschätzte Menge auf Grundlage der Parameter einschließlich des **durch** den Drucksensor (34) ermittelten Einlassdrucks, der **durch** den Drehzahlsensor (35) ermittelten Kraftmaschinendrehzahl und der Temperatur der Einlassluft berechnet.

4. Gerät gemäß einem der vorstehenden Ansprüche, dadurch gekennzeichet, dass das Rückführungssystem (16) einen EGR-Durchlass (17) zum Führen eines Teils des Abgases von dem Abgasdurchlass (13) zu dem Einlassdurchlass (6) und ein EGR-Ventil (18) zum Anpassen der Abgasströmung in dem EGR-Durchlass (17) hat, wobei das EGR-Ventil (18) den EGR-Durchlass (17) wahlweise öffnet und schließt.

5. Gerät gemäß einem der vorstehenden Ansprüche, **gekennzeichnet durch** einen Einlassluftsensor (31) zum Ermitteln einer Menge der Einlassluft und eine Warnvorrichtung (30) zum Warnen des Betreibers vor Fehlfunktion des Einlassluftsensors (31), wobei der Computer (41) die Fehlfunktion des Einlassluftsensors (31) auf Grundlage des berechneten Unterschieds oder des berechneten Verhältnisses ermittelt und die Warnvorrichtung (30) betätigt.

6. Gerät gemäß Anspruch 5, **gekennzeichnet durch** eine Aufzeichnungsvorrichtung (45) zum Aufzeichnen der Fehlfunktion des Einlassluftsensors (31), wobei der Computer (41) die Fehlfunktion des Einlassluftsensors (31) auf Grundlage des berechneten Unterschieds oder des berechneten Verhältnisses bestimmt und die Aufzeichnungsvorrichtung (45) betätigt.

7. Gerät gemäß einem der vorstehenden Ansprüche, **dadurch gekennzeichnet, dass** der Computer eine elektronische Steuereinheit (41) umfasst, die eine Eingangsschnittstellenschaltung (46), Speicher (43, 44, 45), eine Computerschaltung (42) und eine Ausgangsschnittstellenschaltung (47) hat.

## Revendications

1. Un appareil de contrôle des gaz d'échappement évacués d'un moteur diesel (1) vers un passage d'échappement (13), ledit appareil possédant :
un système de recirculation (16) pour renvoyer une partie des gaz d'échappement au moteur diesel (1) par l'intermédiaire d'un passage d'admission (6),
un capteur d'admission (31) pour détecter une quantité réelle (Q2) d'air d'admission s'écoulant dans le passage d'admission (6), et
un calculateur (41) qui contrôle le système de recirculation (16) afin de contrôler une quantité (QE) de gaz d'échappement remis en circulation sur la base d'une différence calculée (Q2 - Q1) entre ladite quantité réelle (Q2) d'air d'admission et une quantité estimée (Q1) d'air d'admission calculée d'après des conditions de fonctionnement du moteur (1), ou sur la base d'un rapport calculé entre ladite quantité réelle (Q2) et ladite quantité estimée (Q1) d'air d'admission, de manière à régler la quantité (QE) de gaz d'échappement remis en circulation,
**caractérisé en ce que**
ledit calculateur (41) obtient la quantité réelle (Q2) d'air d'admission sur la base d'une sortie (VA) dudit capteur d'admission (31) et d'un coefficient de correction (k) qui est mis à jour d'après ladite différence calculée (Q2 - Q1) ou ledit rapport calculé lorsque le système de recirculation (16) arrête la recirculation des gaz d'échappement.

2. L'appareil tel que défini dans la revendication 1, **caractérisé par** un capteur de pression (34) pour détecter la pression d'admission dans le passage d'admission (6) et un capteur de vitesse (35) pour détecter la vitesse du moteur, ledit calculateur (41) calculant la quantité estimée d'après des paramètres comprenant la pression d'admission détectée par le capteur de pression (34) et la vitesse du moteur détectée par le capteur de vitesse (35).

3. L'appareil tel que défini dans la revendication 2, **caractérisé par** un capteur de température (32) pour détecter la température de l'air d'admission s'écoulant dans le passage d'admission (6), ledit calculateur (41) calculant la quantité estimée d'après des paramètres comprenant la pression d'admission détectée par le capteur de pression (34), la vitesse du moteur détectée par le capteur de vitesse (35) et la température de l'air d'admission.

4. L'appareil tel que défini dans l'une quelconque des revendications précédentes, **caractérisé en ce que** ledit système de recirculation (16) comprend un passage RGE (recirculation des gaz d'échappement) (17) pour guider une partie des gaz d'échappement du passage d'échappement (13) vers le passage d'admission (6), et une soupape RGE (18) pour régler l'écoulement de gaz d'échappement dans le passage RGE (17), ladite soupape RGE (18) ouvrant et fermant sélectivement le passage RGE (17).

5. L'appareil tel que défini dans l'une quelconque des revendications précédentes, **caractérisé par** un capteur d'air d'admission (31) pour détecter la quantité d'air d'admission et un équipement d'avertissement (30) pour avertir l'opérateur d'une défaillance du capteur d'air d'admission (31), ledit calculateur (41) déterminant la défaillance du capteur d'air d'admission (31) sur la base de la différence calculée ou du rapport calculé, et actionnant l'équipement d'avertissement (30).

6. L'appareil tel que défini dans la revendication 5, **caractérisé par** un équipement d'enregistrement (45) pour enregistrer la défaillance du capteur d'air d'admission (31), ledit calculateur (41) déterminant la défaillance du capteur d'air d'admission (31) sur la base de la différence calculée ou du rapport calculé, et actionnant l'équipement d'enregistrement (45).

7. L'appareil tel que défini dans l'une quelconque des revendications précédentes, **caractérisé en ce que** ledit calculateur comprend une unité de contrôle électrique (41) qui possède un circuit d'interface d'entrée (46), des mémoires (43, 44, 45), un circuit de calcul (42) et un circuit d'interface de sortie (47).
